# EUROPÄISCHE PATENTSCHRIFT

(11) **EP 0 672 621 B1**
(45) Veröffentlichungstag und Bekanntmachung des Hinweises auf die Patenterteilung: **03.09.1997**
(21) Anmeldenummer: 95102884.4
(22) Anmeldetag: 01.03.1995
(51) Int. Cl.: C01G 37/02, C01G 37/00, C25B 1/00

(54) **Verfahren zur Verminderung des Eisengehaltes eines chromhaltigen Elektrolyten**
Process for reducing the iron content of a chromium-containing electrolyte
Procédé pour diminuer la teneur en fer d'un électrolyte contenant du chrome

(30) Priorität: 15.03.1994 DE 4408614
(43) Veröffentlichungstag der Anmeldung: 20.09.1995
(73) Patentinhaber: HOECHST AKTIENGESELLSCHAFT, 65929 Frankfurt am Main (DE)
(72) Erfinder: Feist, Norbert, Dr., D-86368 Gersthofen (DE); Herbst, Hans, Dr., D-86405 Meitingen (DE); Stenzel, Jürgen, Dr., D-86462 Achsheim (DE)

(56) Entgegenhaltungen:
- DE-A- 3 004 174
- FR-A- 552 478
- GB-A- 473 454

## Beschreibung

Die Erfindung bezieht sich auf die Abtrennung von geringen Mengen Eisen aus einem chromhaltigen Elektrolyten, welcher elektrochemisch zu Chromschwefelsäure regeneriert werden soll.

Für die Bleichung von Montanwachs wird Chromschwefelsäure verwendet, welche die Dunkelstoffe im Montanwachs oxidiert. Dabei wird das sechswertige Chrom der Chromschwefelsäure reduziert zu dreiwertigem Chromsulfat. Dieses wird durch elektrischen Strom in Elektrolysezellen wieder zum sechswertigen Chrom oxidiert und die entstandene Chromschwefelsäure wieder zum Bleichen von Montanwachs verwendet.

Das Oxidationsmittel Chromschwefelsäure wird im geschlossenen Kreislauf geführt. Das Verfahren arbeitet praktisch verlustfrei.

Montanwachs wird durch Extraktion von Braunkohle gewonnen. Es enthält Spuren von Verunreinigungen von anorganischen Verbindungen, beispielsweise Verbindungen von Eisen, Aluminium, Natrium, Kalium etc., die beim Bleichen des Rohmontanwachses mit der heißen Chromschwefelsäure gelöst werden und sich als Sulfate im Elektrolyten anreichern. Außerdem oxidiert die Chromschwefelsäure auch den im Montanwachs enthaltenen organisch gebundenen Schwefel zu Schwefelsäure. Diese Schwefelsäure reichert sich ebenfalls im Elektrolyten an.

In der wiederholt im Kreislauf geführten Chromschwefelsäure führen die Fremdsalze zu Veränderungen des Elektrolyten, zu Störungen bei seiner Handhabung und zu Ausbeuteverlusten bei der elektrochemischen Regenerierung.

Der Elektrolyt besteht ursprünglich nur aus Chromsulfat und Schwefelsäure in Wasser. Schon nach einem Jahr enthält der Elektrolyt größere Mengen an Fremdsalzen, wodurch seine Dichte steigt, seine Viskosität sich erhöht, die Leitfähigkeit sich erniedrigt und der Kristallisationsbeginn der konzentrierten Lösung wegen der Bildung von Alaunen früher eintritt und zu Störungen beim technischen Umgang mit der heißen, konzentrierten Lösung führt.

Die obigen Veränderungen des Elektrolyten und nachteiliges chemisches Verhalten unter Betriebsbedingungen führen zu schlechteren Stromausbeuten bei der elektrochemischen Regenerierung der Chromschwefelsäure in Gegenwart von Fremdsalzen im Elektrolyten.

Es ist daher für das effiziente Betreiben der elektrochemischen Regenerierung der Chromschwefelsäure wichtig, daß der Elektrolyt in der ursprünglichen Form erhalten bleibt oder zumindest daß die Menge der zwangsläufig in den Elektrolyt gelangenden anorganischen Verunreinigungen auf möglichst niedrigem Niveau gehalten wird.

Das Abtrennen von anorganischen Verunreinigungen, die schwerlösliche oder unlösliche Sulfate bilden, ist einfach und geschieht praktisch von selbst. Calciumsulfat und Magnesiumsulfat fallen aus und bilden Niederschläge oder störende Krusten und Beläge in Rohrleitungen, Meßinstrumenten und in der Elektrolysezelle, sind jedoch als Verunreinigung im Elektrolyten mengenmäßig zu vernachlässigen.

Eisensulfat und Aluminiumsulfat sind dagegen gut löslich in der schwefelsauren Elektrolyt-Lösung und unterscheiden sich im chemischen und physikalischen Verhalten praktisch nicht von Chromsulfat.

Die Trennung von Eisen und Chrom, wie sie in der Analytik bekannt ist, bietet keine Anleitung zum Arbeiten unter den vorliegenden Gegebenheiten. Weder die Oxidation des Chrom-III zu Chromat im stark alkalischen Medium im Ammonsulfid-Trennungsgang noch das Ausäthern von Eisen-III-chlorid beim Urotropin-Trennungsgang sind brauchbare Methoden für die Ausschleusung von wenig Eisen neben viel Chrom im schwefelsauren Medium im großtechnischen Maßstab.

Es wurde nun gefunden, daß durch eine selektive Oxidation das zweiwertige Chrom zu dreiwertigem Chrom praktisch vollständig oxidiert werden kann, sodaß Chrom und Eisen getrennt werden können.

Die Erfindung betrifft somit ein Verfahren zur Verminderung des Eisengehaltes eines chromhaltigen Elektrolyten, welcher im wesentlichen aus einer schwefelsauren Chromsulfat-Lösung besteht und als Fremdstoffe Eisen-, Aluminium-, Erdalkali- und Alkalisulfate enthält, dadurch gekennzeichnet, daß man den aus den Kathodenräumen einer Chromsäure-Elektrolysezellen-Kaskade fließenden Katholyten einer selektiven Oxidation des Cr-II zu Cr-III unterwirft, vom so behandelten Katholyten eine Teilmenge abzweigt, aus dieser Teilmenge das Cr-III als Hydroxid fällt, die entchromte, eisenhaltige Lösung abtrennt und das Chrom-III-hydroxid zusammen mit dem Rest des oxidativ behandelten Katholyten dem auf Anoden- und Kathodenräume zu verteilenden Elektrolyten zuführt.

Bei der elektrochemischen Erzeugung von Chromschwefelsäure findet die Oxidation von dreiwertigem Chrom zu sechswertigem Chrom an der Anode statt. An der Kathode entsteht nicht nur Wasserstoff, sondern als Nebenreaktion wird das auch im Kathodenraum vorhandene dreiwertige Chrom zu zweiwertigem Chrom und das dreiwertige Eisen zu zweiwertigem Eisen reduziert. Während die geringen, im Elektrolyt enthaltenen Mengen an Eisen vollständig zu zweiwertigem Eisen reduziert werden, werden beim Chrom unter den Betriebsbedingungen nur etwa 40 % des dreiwertigen Chrom in zweiwertiges umgewandelt.

In der Chromschwefelsäure liegt sechswertiges Chrom neben dreiwertigem Eisen vor. Sechswertiges Chrom zeigt erhebliche Unterschiede im chemischen Verhalten zum dreiwertigen Chrom und damit auch zum dreiwertigen Eisen. In der technischen, durch elektrochemische Regeneration erzeugten Chromschwefelsäure wird jedoch nicht alles Chrom-III in Chrom-VI umgewandelt, sondern nur ca. 66 %, so daß in der fertigen Chromschwefelsäure noch erhebliche Mengen Chrom-III-sulfat (1/3 der gesamten Chrommenge) vorliegen.

Im Betriebselektrolyten sind jedoch nicht die reinen Sulfate vorhanden, sondern wegen des Gehalts an einwertigen Ionen bilden sich beim Abkühlen die Alaune Me^{I} Me^{III}(SO₄)₂ x H₂O, bei denen Me^{I} einwertige Alkaliionen Na⁺, K⁺ oder NH₄⁺ bedeuten und Me^{III} dreiwertige Ionen wie Chrom, Eisen und Aluminium bedeuten. Das typische Verhalten der Alaune ist die Mischkristallbildung, die bei Ionen fast gleicher Ionengröße besonders ausgeprägt ist. Da Chrom³⁺, Eisen³⁺ und Aluminium³⁺ praktisch gleichen Ionendurchmesser haben, kommt es zu intensiver Mischkristallbildung, so daß eine technisch praktikable Trennung von Eisen und Chrom auf dem Wege der fraktionierten Kristallisation ausscheidet.

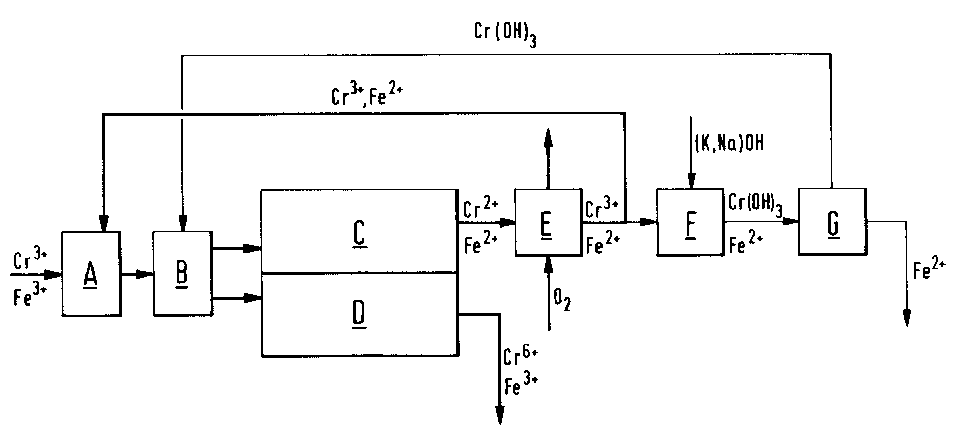

Das erfindungsgemäße Verfahren wird durch das in der Figur dargestellte Fließschema erläutert. In der Figur bedeuten
A eine Mischeinrichtung,
B ein Vorratsgefäß,
C die Kathodenräume einer Elektrolysezellenkaskade,
D die Anodenräume einer Elektrolysezellenkaskade,
E eine Oxidationseinrichtung,
F ein Fällungsgefäß und
G eine Filtereinrichtung.

Für die elektrochemische Regeneration der Chromschwefelsäure wird die vom Chromsäureverbraucher (Montanwachsbetrieb) zurückkommende schwefelsaure Chrom-III-sulfat-Lösung in einer Mischeinrichtung A mit Katholyt und Wasser (zum Konzentrationsausgleich) gemischt, in einem Vorratsgefäß B gesammelt und in die Anodenräume D und Kathodenräume C einer Kaskade von Elektrolysezellen eingespeist. Nach der Regeneration wird der Anolyt als Chromschwefelsäure an den Verbraucher geliefert.

Der Katholyt besteht aus
- 68 bis 85 g: Cr/dm³
- 400 bis 600 g: SO₄²⁻/dm³
- 3 bis 15 g: Fe/dm³,
dabei liegen ca. 40 % des Chroms als zweiwertiges Chrom, der Rest als dreiwertiges Chrom vor. Das gesamte Eisen liegt als zweiwertiges Eisen vor. Etwa 2/3 der Sulfationen sind Sulfate des Chroms, des Eisens, des Aluminiums, des Natriums . Etwa 1/3 der Sulfationen rühren von freier Schwefelsäure her.

Für die Durchführung des erfindungsgemäßen Verfahrens wird der Katholyt nicht direkt in die Mischeinrichtung A zurückgeführt, sondern einer selektiven Oxidation unterworfen. Dies geschieht durch intensiven Kontakt mit einem sauerstoffhaltigen Gas, vorzugsweise Luft, in einer Oxidationseinrichtung E. Dies kann im Gleichstrom in einem Begasungsreaktor oder in einer Kaskade von Begasungstöpfen erfolgen. Das Verfahren wird jedoch vorzugsweise in einer geeigneten Kolonne, welche Füllkörper oder Siebböden enthalten kann, im Gegenstrom durchgeführt. Dabei strömt das sauerstoffhaltige Gas der herunterrieselnden Lösung entgegen und das zweiwertige Chrom wird praktisch vollständig in dreiwertiges Chrom überführt.

Hinter der Oxidationseinrichtung E wird eine Teilmenge des oxidativ behandelten Katholyten abgezweigt und in ein Fällungsgefäß F überführt. Die Teilmenge umfaßt ca. 2 bis 5 Vol.-% des Katholyten. Das Fällungsgefäß F ist vorzugsweise ein Rührbehälter, in welchem ein Blattrührer für die notwendige Durchmischung von zulaufendem Katholyt und pH-gesteuert zudosierter 50%iger Natronlauge sorgt, ohne die gebildeten Hydroxidflocken zu zerschlagen. Hier wird durch vorsichtige Zugabe von Alkalihydroxid ein pH-Wert von etwa 5,2 eingestellt. Dabei fällt das Chrom-III als Hydroxid aus.

Die Aufschlämmung wird auf eine Filtereinrichtung G gegeben und die das Eisen-II enthaltende Lösung abgetrennt und zur Abwasseraufbereitung gegeben. Das Chrom-III-hydroxid wird mit Wasser gewaschen und in das Vorratsgefäß B verbracht. Das Chrom-III-hydroxid wird im Elektrolyt wieder aufgelöst. Der Elektrolyt enthält weniger Eisen als vorher.

Die Hauptmenge des selektiv oxidierten Katholyten wird direkt in die Mischeinrichtung A geleitet.

Durch ständige Bearbeitung einer Teilmenge des Katholyten gelingt es, die anorganischen Bestandteile des Elektrolyten, insbesondere Eisen, auszuschleusen und auf einem erträglichen niedrigen Niveau zu halten.

### Beispiel 1:

Auf den Verteilerkopf einer 10 m hohen, mit Füllkörpern in 2 Lagen a je 2,50 m Höhe gefüllter Kolonne von 60 cm ⌀ wurden von oben ca. 20 m³ Katholyt/h von 70°C aufgegeben. Im Gegenstrom wurden ca. 1000 m³ Luft/h hindurchgedrückt.

Das zweiwertige Chrom setzte sich praktisch vollständig mit dem Sauerstoff der Luft zu dreiwertigem Chrom um. Das Eisen reagierte unter den gegebenen Verhältnissen im stark sauren Medium nicht mit Luft und blieb im zweiwertigen Zustand.

Die Oxidationskolonne wurde vollkontinuierlich betrieben. Die Zusammensetzung des oxidierten Katholyten war
- 78 g: Cr/dm³
- 470 g: SO₄²⁻/dm³
- 7 g: Fe/dm³

Dabei lag sämtliches Chrom als Chrom-III-sulfat und sämtliches Eisen als Eisen-II-sulfat vor.

### Beispiel 2

Nach der Kolonne wurde eine Teilmenge dem oxidativ behandelten Katholyten entnommen und zur Trennung von Chrom und Eisen verwendet. Dazu wurden einem 12 m³ Rührbehälter 3 500 dm³ oxidierter Katholyt aus Beispiel 1 vorgelegt und 3 500 dm³ Wasser zugegeben. Unter Rühren flossen im Laufe von ca. 60 min insgesamt 1 760 dm³ Natronlauge 50 %ig zu. Die Natronlauge strömte durch ein gelochtes Verteilerrohr, aus dem ca. 10 dünne Flüssigkeitsstrahlen in je 20 cm Abstand auf das vorgelegte und von einem Blattrührer bewegte Katholyt-Wasser-Gemisch flossen. Dadurch wurde vermieden, daß die Flüssigkeit örtlich alkalisch wurde. Die Zugabe der Natronlauge wurde zum Ende der Neutralisation verlangsamt, so daß sich der benötigte pH-Wert der Lösung von pH 5,2 gleichmäßig in dem Rührbehälter einstellte.

Die Natronlaugezufuhr wurde bei pH 5,2 abgebrochen und die durch Neutralisationswärme auf 60°C aufgewärmte Aufschlämmung von Hydroxiden mittels einer Pumpe auf eine Filterpresse gegeben.

Die Beladung der Filterpresse mit Hydroxidaufschlämmung wurde beendet, als bei ca. 6 bar Pumpenvordruck durch die 66 m² Filterfläche nur noch ca. 4 m³ Filtrat/h durchtraten, was nach 20 bis 30 min der Fall war.

Danach wurde mit der gleichen Pumpe Waschwasser auf die Filterpresse gegeben und der Filterkuchen gewaschen. Das Waschen wurde beendet, als die Leitfähigkeit des Waschwassers nach 35 bis 45 min von über 60 mS auf 5 mS abgesunken war.

Die Analyse des Filterkuchens zeigte einen Chromgehalt von 42,3 % und einen Eisengehalt von 1,2 %, jeweils bezogen auf Trockensubstanz. Das Molverhältnis von Chrom zu Eisen betrug im Filterkuchen 35 : 1. Im oxidativ behandelten Katholyten betrug das Chrom : Eisen - Verhältnis 12 : 1. Die Fällung führte zu einer Verminderung des Eisens von 5,9 Mol % auf 1,9 Mol % oder zu einer Ausschleusung des Eisens um 66 %.

### Beispiel 3

Gegenüber der diskontinuierlichen Arbeitsweise gemäß Beispiel 2 ist es vorteilhafter, die Fällung kontinuierlich auszuführen. Dazu wurde in einem 12 m³ Rührbehälter zur vorgelegten Hydroxidaufschlämmung bei pH 5,2 unter Rühren kontinuierlich ein geringer Strom des oxidierten Katholyten zugeführt. Die Natronlauge wurde ebenfalls kontinuierlich mengengesteuert von einer pH-Sonde geregelt zugegeben. Auf diese Weise konnte der benötige pH-Wert von 5,2 genauer eingehalten werden. Außerdem traf das durch die Neutralisation ausfallende Hydroxid auf viel vorgelegtes in der Hydroxidaufschlämmung vorhandenes Hydroxid, wodurch es gröber kristallin und damit leichter filtrierbar anfiel.

Bei der kontinuierlichen Fällung liefen 500 dm³/h oxidierter Katholyt aus Beispiel 1 sowie 500 dm³/h Wasser kontinuierlich in die Fällungswanne, in der ca. 3 m³ Hydroxidaufschlämmung bei pH 5,2 von einem Blattrührer in Bewegung gehalten wurden. Von einer pH-Sonde wurde der pH-Wert der Aufschlämmung gemessen und über eine selbsttätige Regelung die Natronlaugezugabe so gesteuert, daß der benötigte pH-Wert von 5,2 stets in der Hydroxidaufschlämmung aufrechterhalten blieb.

Im Durchschnitt flossen 250 dm³/h Natronlauge NaOH 50 %ig in die Fällungswanne. So entstanden ca. 1,25 m³/h Hydroxidaufschlämmung. Als der Inhalt der Fällungswanne von etwa 3 m³ auf ca. 6 m³ angestiegen war, wurde ca. 3 m³ Hydroxidaufschlämmung aus der Fällungswanne in die Filterpresse gepumpt, während die kontinuierliche Fällung weiterlief.

Nach ca. 20 min war die Filterpresse mit ca. 3 m³ Hydroxidaufschlämmung beaufschlagt, wobei eine Anfangsfiltratmenge von über 10 m³/Std. schnell bis auf 4 m³/Std. Filtrat zurückging. Dann wurde die Beladung der Filterpresse mit Hydroxidaufschlämmung abgebrochen und der Filterkuchen gewaschen, bis die Leitfähigkeit des Waschwassers durch abnehmenden Natriumsulfatgehalt von über 60 mS auf 5 mS abgenommen hatte.

Der Filterkuchen wurde anschließend im Elektrolyt wieder aufgelöst.

Pro Filterpresse wurden etwa 1 000 kg feuchter Filterkuchen entnommen (Restfeuchte ca. 80 %). Der Filterkuchen enthielt 41,5 g Cr und 0,5 g Fe bezogen auf die Trockensubstanz. Das Chrom zu Eisen Verhältnis betrug 83 Teile Chrom zu 1 Teil Eisen. Die Verminderung des Eisengehaltes betrug 89 %.

## Patentansprüche

1. Verfahren zur Verminderung des Eisengehaltes eines chromhaltigen Elektrolyten, welcher im wesentlichen aus einer schwefelsauren Chromsulfat-Lösung besteht und als anorganische Fremdstoffe Eisen, Aluminium-, Erdalkali- und Alkalisulfate enthält, dadurch gekennzeichnet, daß man den aus den Kathodenräumen einer Kaskade von Chromsäure-Elektrolysezellen fließenden Katholyten einer selektiven Oxidation des Cr-II zu Cr-III unterwirft, vom so behandelten Katholyten eine Teilmenge abzweigt, aus dieser Teilmenge das Cr-III als Hydroxid fällt, die entchromte, eisenhaltige Lösung abtrennt und das Chrom-III-hydroxid zusammen mit dem Rest des oxidativ behandelten Katholyten dem auf Anoden- und Kathodenräume zu verteilenden Elektrolyten zuführt.

## Claims

1. A process for reducing the iron content of a chromium-containing electrolyte which essentially comprises a sulfuric-acid chromium sulfate solution and contains inorganic impurities in the form of sulfates of iron, or aluminum, of alkaline earth metals and of alkali metals, wherein the catholyte flowing from the cathode compartments of a cascade of chromic acid electrolytic cells is subjected to a selective oxidation of the Cr(II) to Cr(III), a portion of the catholyte thus treated is diverted, the Cr(III) is precipitated from said portion as the hydroxide, the dechromed, iron-containing solution is separated off, and the chromium (III) hydroxide, together with the remainder of the catholyte treated oxidatively is fed into the electrolyte which is to be distributed over anode compartments and cathode compartments.

## Revendications

1. Procédé de réduction de la teneur en fer d'un électrolyte contenant du chrome, constitué essentiellement d'une solution de sulfate de chrome contenant des sulfates et, en tant que matières inorganiques étrangères, des sulfates de fer, d'aluminium, de métaux alcalino-terreux et alcalins, caractérisé en ce que le catholyte sortant du compartiment cathodique d'une cascade de cellules d'électrolyse à l'acide chromique est traité par oxydation sélective du Cr-II en Cr-III, une partie du catholyte ainsi traitée étant déviée, on précipité sous forme d'hydroxyde Cr-III contenu dans cette partie de catholyte, on sépare la solution déchromée contenant du fer et on renvoie aux compartiments anodique et cathodique l'hydroxyde de chrome-III ensemble avec le reste du catholyte traité par oxydation.
